# EUROPEAN PATENT SPECIFICATION

(11) **EP 4 446 029 B1**
(45) Date of publication and mention of the grant of the patent: **31.12.2025**
(21) Application number: 24169654.1
(22) Date of filing: 11.04.2024
(51) Int. Cl.: B21D 39/04, B25H 7/00

(54) **MARKING ARRANGEMENT AND METHOD FOR PRODUCING MARKINGS ON OUTER SURFACE OF OBJECT HAVING CYLINDRICAL SHAPE, AND CRIMPING SYSTEM FOR PROVIDING CRIMP ASSEMBLY INCLUDING MARKINGS ON OUTER SURFACE OF HOSE CRIMP OF SAID ASSEMBLY**
MARKIERUNGSANORDNUNG UND VERFAHREN ZUR HERSTELLUNG VON MARKIERUNGEN AUF DER AUSSENFLÄCHE
DISPOSITIF DE MARQUAGE ET PROCÉDÉ DE FABRICATION DE MARQUAGES SUR LA SURFACE EXTÉRIEURE D'UN OBJET DE FORME CYLINDRIQUE

(30) Priority: 12.04.2023 FI 20235412
(43) Date of publication of application: 16.10.2024
(73) Proprietor: Lillbacka Powerco OY, 62300 Härmä (FI)
(72) Inventor: HARRI, Sami, 62200 KAUHAVA (FI)
(74) Representative: Berggren Oy

(56) References cited:
- DE-B3- 102006 035 131
- GB-A- 2 514 575
- JP-A- 2017 194 139

## Description

### FIELD OF THE INVENTION

The present invention relates in general to marking arrangements and devices which are utilized for marking cylindrical objects. In particular, however not exclusively, the present invention concerns marking arrangements, systems and methods used for producing markings on outer surface of cylindrical objects, especially of a hose crimp of a crimp assembly.

### BACKGROUND

In known marking devices, a user must keep the object in the correct place when the marking device produces markings to the object. For example, in case of dot peen marking devices, the impact of the pin striking the surface of the object easily causes the object to move, thereby ruining the marking. Furthermore, the user must be very careful to place the object in the correct position so that the marking head is able to reach the object but does not hit it with too much force. In case of other marking technologies, such as laser markers, the user typically cannot even hold the object, and thus, the object has to be placed to the platform of the marking device and tighten thereto by clamps or the like, making the whole process complicated and laborious. There is thus clearly a need to develop marking devices, systems and methods for making the marking more accurate and less laborious.

Document GB 2 514 575 A discloses a marking arrangement, according to the preamble of claim 1 and document DE 10 2006 035131 B3 discloses a method according to the preamble of claim 10.

### SUMMARY

An objective of the present invention is to provide a marking arrangement and a method for producing markings on an outer surface of an object having a cylindrical shape and defining a longitudinal direction, and a crimping system for providing a crimp assembly including markings on an outer surface of a hose crimp of the crimp assembly. Another objective of the present invention is that the marking arrangement, the system, and the method at least alleviate some of the drawbacks in the known solution, such as making the marking more accurate and less laborious.

The objectives of the invention are reached by a marking arrangement and a method for producing markings on an outer surface of an object having a cylindrical shape and defining a longitudinal direction, and a crimping system for providing a crimp assembly including markings on an outer surface of a hose crimp of the crimp assembly as defined by the respective independent claims.

According to a first aspect, a marking arrangement is provided. The marking arrangement is suitable for producing markings on an outer surface of an object having a cylindrical shape, such as being hollow or solid, and defining a longitudinal direction, such as being a tubular object. The marking arrangement comprises an actuating mechanism and a marking device comprising a marking head configured to produce the markings. The marking arrangement also comprises a first support attached to the marking device and a second support, wherein a surface of the first support to become in contact with the object is flat. The second support comprises at least two support surfaces arranged to align the object relative to the marking head, and support the object on opposite sides of the object in a second direction, wherein the second direction is perpendicular relative to the longitudinal direction of the object. Furthermore, the arrangement is configured so that the first support and the second support are movable relative to each other in a first direction, such as in a vertical direction, by the actuating mechanism so that the supports become in contact with the object from opposite sides of the object in the first direction to fix the object between the supports, and to align the object with the marking head.

In various embodiments, the at least two support surfaces may define at least two slopes on said opposite sides in the second direction so that a distance between them in the second direction becomes smaller when moving away from the first support in the first direction, such as at least resembling or having a V-shape, the second support being arranged to receive the object into an inner space defined by the two slopes for supporting the object. In addition, a position of an inner angle defined by the at least two slopes, such as of the V-shape, or their intersecting imaginary extensions is aligned with the marking head with respect to the second direction.

Thus, in some embodiments, the second support may have a V-shape, and the arrangement is adapted for receiving the object into the inner space of the V-shape.

Alternatively or in addition, the support surfaces may be symmetrically arranged relative to each other, such as defining slopes with the same angle on said opposite sides in the second direction. This is achievable by the second support having the V-shape, for instance. However, the support surfaces are not necessarily in contact with each other but there may be a gap therebetween. For example, the bottom part of the V-shape may be omitted, leaving just portions of the inclined sides of the V-shape.

Furthermore, the marking arrangement comprises a position sensor for detecting when the first support is in contact with the object in a marking position in which the marking head is arranged to able to produce the markings.

The first support comprises a frame portion and a supporting portion attached movably to each other, and the position sensor is attached to the frame portion or the supporting portion for detecting when the supporting portion is in the marking position. Thus, the first support may indeed comprise two portions, wherein the frame portion being fixed relative to the marking device and the supporting portion being movably attached to the frame portion, and having the position sensor determining if the supporting portion is in contact with the object.

The position sensor, such as based on an optical signal, such as infrared, electrical signal, such as closing/opening of an sensing circuit, or a mechanical switch, may be arranged so that when the supporting portion becomes in contact with the object and the movement in the first direction between the first and second support continues, a gap between the supporting portion and the frame portion starts to decrease. The position sensor may be arranged to monitor the size of the gap. Once the gap is reduced to a certain level or even disappeared, the position sensor generates a signal, based on which it is decided in the control unit that the object is in the marking position.

In various embodiments, the marking device may be a dot peen marker, wherein the marking head comprises a marking pin. The marking pin may be arranged to punch dots to the outer surface to produce the markings.

In various alternative embodiments, the marking device may be a laser marker, wherein the marking head is a laser marking head. The markings may thus be produced by the laser marking head using laser beam.

According to a second aspect, a crimping system for providing a crimp assembly including markings on an outer surface of a hose crimp of the crimp assembly is provided. The crimping system comprises a crimping unit, such as a hydraulic crimping unit, for crimping a hose crimp onto an end of a hose portion, and a marking arrangement in accordance with the first aspect. The crimping system also comprises a control unit configured to operate the marking head of the arrangement in accordance with marking instructions for producing the markings on an outer surface of the hose crimp. Still further, the crimping system comprises a transfer unit between the crimping unit and the arrangement, the transfer unit configured to provide, such as move or transfer, the crimp assembly from the crimping unit onto the second support of the arrangement to produce the markings.

The marking instructions may include information about the crimp assembly, such as an identification number or string, or other product information, or a crimping date and/or patch number, and/or one or several crimping parameter values, for example, crimping pressure.

In various embodiments, the marking instructions may be generated during the crimping. Then, the marking instruction may be provided to the marking arrangement for producing the markings to the object being provided thereto from the crimping unit, such as by the transfer unit.

The transfer unit may comprise a conveyor device extending between the crimping unit and the marking arrangement. Alternatively, the transfer unit may comprise a robot arm, for example, being able reach to the crimping unit at one position and to the second support of the marking arrangement in another position.

According to a third aspect, a method for producing markings on an outer surface of an object having a cylindrical shape and defining a longitudinal direction is provided. The method comprises:
- providing the object onto a second support of a marking arrangement comprising an actuating mechanism, a marking device comprising a marking head configured to produce markings on an outer surface of the object, and a first support attached to the marking device, wherein a surface of the first support to become in contact with the object is flat, and the second support comprises at least two support surfaces arranged to align the object relative to a marking head, and to support the object on opposite sides of the object in a second direction, wherein the second direction is perpendicular relative to the longitudinal direction of the object,
- moving the first support and the second support relative to each other in a first direction, such as in a vertical direction, by the actuating mechanism so that the supports become in contact with the object from opposite sides of the object in the first direction to fix the object between the supports, to align the object with the marking head, and to arrange the marking head in a suitable distance from the outer surface so that the marking head is capable of producing the markings, and
- producing the markings on the outer surface of the object by the marking head based on marking instructions.

In various embodiments, the object may be a hose crimp, and the method comprises, before the object is being provided onto the second support, crimping the hose crimp onto an end of a hose portion by a crimping unit.

Furthermore, the providing may be performed by a conveyor device extending between the crimping unit and the marking arrangement, or a robot arm, such as arranged reachable to both the crimping unit and the marking arrangement.

In various embodiments, the method may comprise detecting, by a position sensor attached to the first support when the first support is in contact with the object in a marking position in which the marking head is arranged to able to produce the markings.

The present invention provides a marking arrangement and a method for producing markings on an outer surface of an object having a cylindrical shape and defining a longitudinal direction, and a crimping system for providing a crimp assembly including markings on an outer surface of a hose crimp of the crimp assembly. The present invention provides advantages over known solutions in that the object can easily be placed in the correct position and its stays in that position during the marking process without the need for the user to constantly by using force maintaining the object in its place. There is also no need for complicated clamps or the like because the supports of the marking arrangement substantially simultaneously hold the object and align it the with marking head, while the first support is to ensure that the marking head is at the correct distance from the outer surface of the object when the marking arrangement, specifically the first support, is in the marking position.

Various other advantages will become clear to a skilled person based on the following detailed description.

The expression "a plurality of" may refer to any positive integer starting from two, such as being two, three, four, etc.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also unrecited features.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figures 1A and 1B illustrate schematically a marking arrangement from one side.
Figures 2A and 2B illustrate schematically the marking arrangement of Figs. 1A and 1B from another side and a perpendicular viewing direction relative to that of Figs. 1A and 1B, respectively.
Figures 3A and 3B illustrate schematically a marking arrangement from one side.
Figures 4A and 4B illustrate schematically the marking arrangement of Figs. 3A and 3B from another side and a perpendicular viewing direction relative to that of Figs. 3A and 3B, respectively.
Figure 5 illustrates schematically a crimping system for providing a crimp assembly including markings on an outer surface of a hose crimp of the crimp assembly.
Figure 6 illustrates schematically a crimping system for providing a crimp assembly including markings on an outer surface of a hose crimp of the crimp assembly.
Figure 7 shows a flow diagram of a method.
Figures 8A and 8B illustrate an object and a hose assembly, respectively.

### DETAILED DESCRIPTION OF SOME EMBODIMENTS

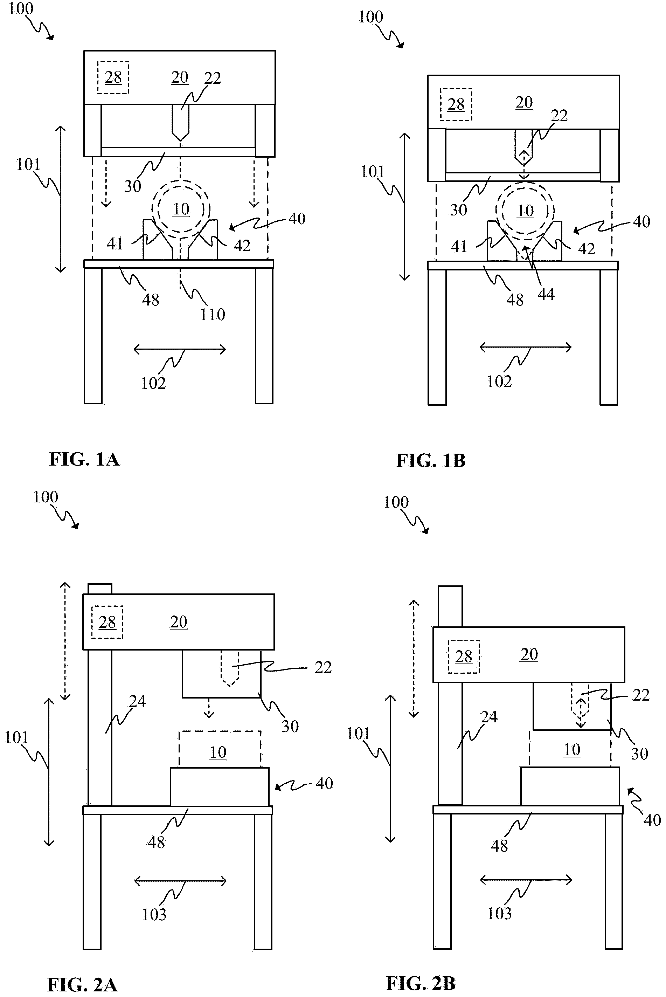

Figures 1A and 1B illustrate schematically a marking arrangement 100 from one side thereof. Furthermore, Figs. 2A and 2B illustrate schematically the marking arrangement 100 of Figs. 1A and 1B from another side and a perpendicular viewing direction relative to that of Figs. 1A and 1B, respectively. The marking arrangement 100 is arranged to be suitable for producing markings on an outer surface of an object 10 having a cylindrical shape, such as being hollow or solid, and defining a longitudinal direction. In Figs. 1A and 1B, the longitudinal direction of the object 10 is towards and/or away from the viewer. In Figs. 2A and 2B, the longitudinal direction of the object 10 is aligned with the third direction 103.

Furthermore, the marking arrangement 100 comprises a marking device 20 comprising a marking head 22 configured to produce the markings and a first support 30 attached to the marking device 20, such as directly or indirectly via a common support structure (not shown). A surface of the first support 30 to become in contact with the object 10 may be flat. Flat surface refers herein to a planar shape. The flat surface may also comprise a plurality of portions which together define a flat support surface (even if there are gaps between the portions). The flat surface allows objects 10 of all sizes to be supported and there is no need to change it when the shape of the object 10, such as relative to the diameter, changes. The first support 30 is used to support the object 10 and to bring the marking head 22 to a correct (pre-defined) distance from the object 10. As is explained herein, the second support 40 is used to align the object 10 relative to the marking head 22 and to take into account the size of the object 10.

The first support 30 is, preferably, arranged relative to the marking head 22 so that when the marking arrangement 100 is in the marking position (visible in Figs. 1B and 2B), the distance of the marking head 22 to the object 10 is suitable for enabling the marking head 22 to produce the markings on the outer surface of the object 10. In various embodiments, there is a distance or gap in the first direction 101 between the supporting portion or surface of the first support 30, which becomes in contact with the object 10, and the marking head 22 which the distance or gap is such that said enabling occurs.

The marking arrangement 100 also comprises a second support 40 comprising at least two support surfaces, such as a first support surface 41 and a second support surface 42. Regarding the support surfaces 41, 42, they can be either one continuous surface or comprising many separate surface portions. For example, the second support 40 may comprise several support elements, even relatively thin elements, which are arranged side by side so that their inclined support surface portions form the first 41 or the second support surface 42. Thus, the object 10 may be support at various position in the longitudinal direction.

The at least two support surfaces 41, 42 are arranged to align the object 10 relative to the marking head 22, and support the object 10 on opposite sides of the object 10 in a second direction 102 (shown in Figs. 1A and 1B), wherein the second direction 102 is perpendicular relative to the longitudinal direction of the object 10.

The marking arrangement 100 also comprises an actuating mechanism 28. A portion of the actuating mechanism 28 is visible in Figs. 2A and 2B which show a vertical support post 24 via which the marking device 20 and/or the common support structure, if any, may be moved relative to the second support 40.

The arrangement 100 is configured so that the first support 30 and the second support 40 are movable relative to each other in a first direction 101, such as in a vertical direction, by the actuating mechanism 28 so that the supports 30, 40 become in contact with the object 10 from opposite sides of the object 10 in the first direction 101 to fix the object between the supports 30, 40, and to align the object 10 with the marking head 22. The alignment line 110 in Fig. 1A illustrates the alignment feature. The alignment is performed automatically when the object 10 is placed onto the second support 40.

As can be understood, the actuating mechanism 28 also comprises means to provide the movement, such as pneumatic, hydraulic or electric means, such as comprising an electric motor. On the other hand, said movement in the first direction 101 may be provided by various different ways, as can be understood by the skilled person, and is not limited to the vertical support post 24 illustrated in Figs. 2A and 2B.

In various embodiments, the at least two support surfaces 41, 42 may define at least two slopes on said opposite sides in the second direction 102 so that a distance between them in the second direction 101 becomes smaller when moving away from the first support 30 in the first direction 101, the second support 40 being arranged to receive the object 10 into an inner space 44 defined by the two slopes for supporting the object 10. Furthermore, a position of an inner angle defined by the at least two slopes or their intersecting imaginary extensions (shown with dashed lines in Fig. 1B) is aligned with the marking head 22 with respect to the second direction 102, as visible. The object 10 is, in the figure, directly below the marking head 22. As described hereinbefore, this is illustrated by the alignment line 110 in Fig. 1A.

In preferable embodiments, the support surfaces 41, 42 are symmetrically arranged relative to each other, such as defining slopes with the same angle on said opposite sides in the second direction 102. Thus, any object 10 having a round cross-section will automatically be positioned aligned with the marking head 22.

A clear advantage of utilizing such a second support 40 is that the cross-section of the object 10 may vary (in some acceptable range) and still the object 10 is well-supported and kept in place, and correctly aligned with the marking head 22.

The marking device 20 may be a dot peen marker, wherein the marking head 22 comprises a marking pin. Alternatively, the marking device may 20 be a laser marker, wherein the marking head 22 is a laser marking head.

Figures 1A-2B also show an optional support platform 48 onto which the marking arrangement 100 may be arranged onto.

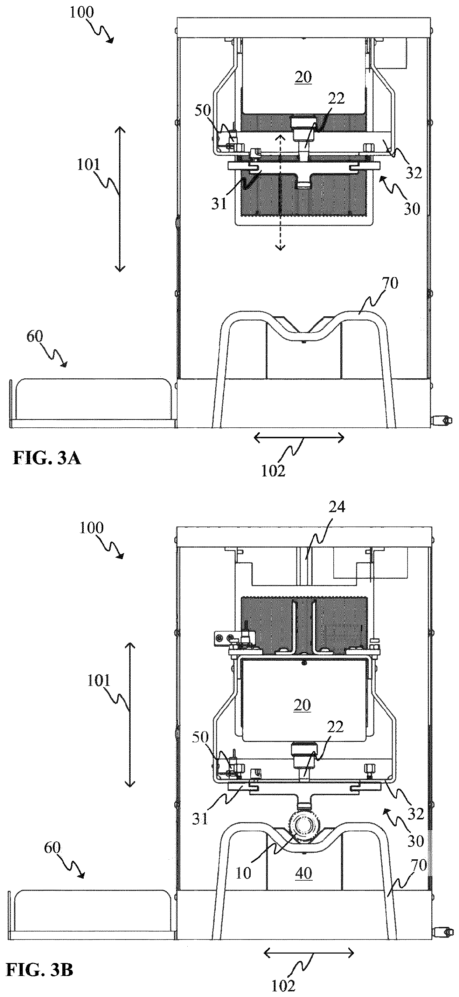

Figures 3A and 3B illustrate schematically a marking arrangement 100 from one side.

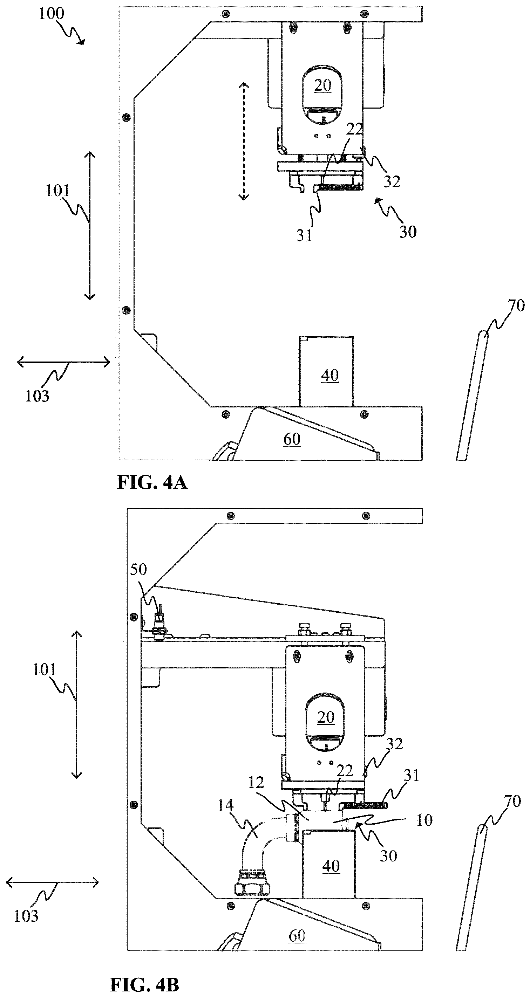

Figures 4A and 4B illustrate schematically the marking arrangement 100 of Figs. 3A and 3B from another side and a perpendicular viewing direction relative to that of Figs. 3A and 3B, respectively.

In Figs. 3A and 3B, the second support 40 defines or at least resembles a V-shape. Thus, the inner angle is at the bottom of the V-shape.

As can be seen in Figs. 3A, 3B and 4B, the marking arrangement 100 comprises a position sensor 50 for detecting when the first support 30 is in contact with the object 10 in a marking position in which the marking head 22 is arranged to able to produce the markings.

In embodiments according to Figs. 3A-4B, the position sensor 50 is fixed to the frame portion 32 of the first support 30. Furthermore, it is arranged to monitor the distance or gap between the frame portion 32 and the supporting portion 31 of the first support 30. Thus, in the arrangement 100, the first support 30 may comprise a frame portion 32 and a supporting portion 31 attached movably to each other, and a position sensor 50 attached to the frame portion 32 for detecting when the supporting portion 31 is in the marking position. Alternatively, the position sensor 50 can be attached to the support portion 31 or, in embodiments not according to the invention, the position sensor can be attached to any other portion of the marking arrangement 100 in which said position monitoring can be performed.

Figures 3A-4B also illustrate a control unit 60 which is configured to control the operation of the marking arrangement 100. The control unit 60 may be dedicated to the marking arrangement 100 or may be part of a control unit of a larger system, as will be described hereinbelow.

In addition, the marking arrangement 100 may comprise a further object support 70. The further object support 70 is arranged to be in front of the second support 40 in the third direction. Thus, in case of objects 10 that are long, while one end of the object 10 is being supported by the first 30 and the second support 40, the opposite end in the longitudinal direction of the object 10 may be supported by the further object support 70.

As illustrated in Figs. 3A and 3B, the further object support 70 may comprise a shape, such as an indentation or the like, that is aligned with the second support 40. Thus, the object 10 is automatically aligned and in correct position.

In various embodiments, the further object support 70 may be a rod or a pipe that is bent to have the shape.

Figures 4A and 4B illustrate another optional feature, namely, an adjustable portion of the supporting portion 31 of the first support 30. There may also be a fixed portion, which is illustrated in said figures on the left of the adjustable portion. In this case, the adjustable portion is movable in the third direction 103, as visible when comparing Figs. 4A and 4B to each other. Thus, the position of the adjustable portion may be changed to be better suitable for the object 10 in question.

Figures 4A and 4B also shows the further object support 70 from another side and clearly shows the gap in the third direction between the second support 40 and the further object support 70. The supporting surface of the further object support 70 is, advantageously, arranged substantially at the same level as the bottom of the second support 40, such as of the V-shape.

Regarding the object 10, it may be essentially any object, such as of metal, that has a cylindrical shape, such as being hollow or solid, and defining a longitudinal direction. For example, it may be a piece of a pipe or a rod. In some embodiments, it may be of plastic or rubber.

In preferable embodiments, however, the object 10 may be a hose crimp 12, or a hydraulic crimp assembly comprising a hose crimp 12 and a hose portion 14. The hose crimp 12 may be crimped around an end of the hose portion 14, for example, to provide a connector portion for the hose portion 14.

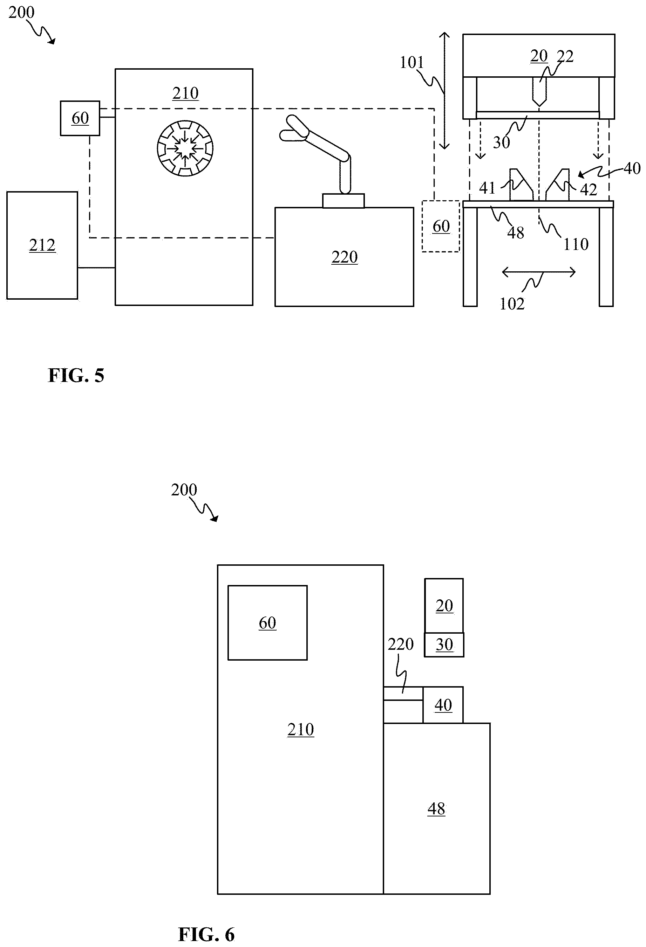

Figure 5 illustrates schematically a crimping system 200 for providing a crimp assembly including markings on an outer surface of a hose crimp 12 of the crimp assembly. The crimping system 200 comprises a crimping unit 210, such as a hydraulic crimping unit, for crimping a hose crimp 12 onto an end of a hose portion 14. Thus, optionally, the crimping unit 210 may comprise or be connected to a hydraulic actuation unit 212 arranged to provide force, by hydraulics, to press the hose crimp 12 onto the end of the hose portion 14.

Optionally, the hydraulic actuation unit 212 may be used to operate the marking arrangement 100 also regarding the movement of the supports 30, 40 and/or, in some embodiments, the operation of the marking head 22. On the other hand, the marking arrangement 100, such the actuating mechanism 28 thereof and/or the marking device 20 may comprise their own actuators, such as electric motors.

Regarding the crimping, it involves using the crimping unit 210 or machine to apply pressure in all directions to a hose crimp 12 to create a tight seal between the hose crimp and the hose portion 14. The pressure is applied preferably evenly through a die that closes slowly, such as visible in Fig. 5 in the center of the crimping unit 210.

The crimping system 200 also comprises a marking arrangement 100 in accordance with what is described hereinbefore.

The crimping system 200 also comprises a control unit 60 configured to operate the marking head 22 of the arrangement 100 in accordance with marking instructions for producing the markings on an outer surface of the hose crimp 12.

Still further, the crimping system 200 comprises transfer unit 220 between the crimping unit 210 and the arrangement 100, the transfer unit 220 configured to provide, such as move or transfer, the hose crimp 12 of the crimp assembly, that is along with the hose portion 14, from the crimping unit 210 onto the second support 40 of the arrangement 100 to produce the markings.

In various embodiments, the system 200 comprises a control unit 60 operating both the crimping unit 200 and the marking arrangement 100. On the other hand, there can be separate control units 60 for the crimping unit 200 and the marking arrangement 100, the separate control units 60 being in communication connection with each other. There may be still separate control unit for operating the transfer unit 220 or its operation may be controlled by the one or separate control units 60 of the crimping unit 200 and/or the marking arrangement 100.

In various embodiments, the marking instructions may be generated during the crimping. Then, the marking instruction may be provided to the marking arrangement 100 for producing the markings to the object being provided thereto from the crimping unit 210, such as by the transfer unit 220. Thus, the chain of operation is intact and the correct object 10 becomes marked with correct markings.

In various embodiments, the marking instructions includes information about the crimp assembly, such as identification number or string, and/or date of production, and/or one or several crimping parameter values, such as crimping pressure value.

In Fig. 5, the transfer unit 220 comprises a robot arm. However, it could as well be a conveyor or the like device for moving the object 10 / hose assembly / hose crimp 12.

Figure 6 illustrates schematically a crimping system 200 for providing a crimp assembly including markings on an outer surface of a hose crimp 12 of the crimp assembly.

The crimping system 200 of Fig. 6 is more integrated than what is shown in Fig. 5. The transfer unit 220 is an, optionally relatively short, conveyor device extending between the crimping unit 210 and the marking arrangement 100. Otherwise, similar remarks apply to the system 200 in Fig. 6 as to the one in Fig. 5.

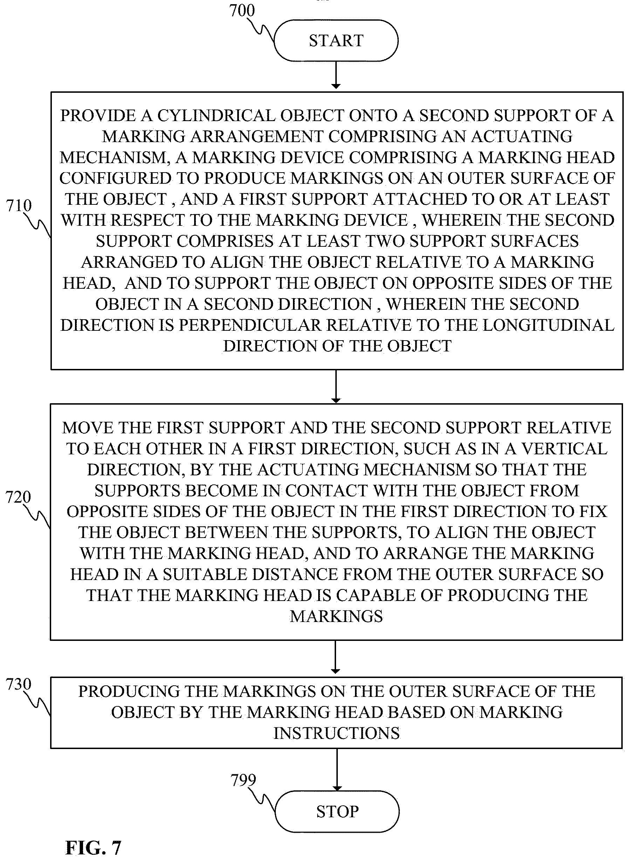

Figure 7 shows a flow diagram of a method for producing markings on an outer surface of an object 10 having a cylindrical shape, such as being hollow or solid, and defining a longitudinal direction.

Item, or method step, 700 refers to a start-up phase of the method. Components and devices may be set up for operation, and the object 10, such as any suitable object having the cylindrical shape or specifically a hose crimp 12 and/or a hose assembly, is received, obtained, produced, or manufactured.

Item, or method step, 710 refers to providing the object 10 onto a second support 40 of a marking arrangement 100 comprising an actuating mechanism 28, a marking device 20 comprising a marking head 22 configured to produce markings on an outer surface of the object 10, and a first support 30 attached to the marking device 20, wherein the second support 40 comprises at least two support surfaces 41, 42 arranged to align the object 10 relative to a marking head 22, and to support the object 10 on opposite sides of the object 10 in a second direction 102, wherein the second direction 102 is perpendicular relative to the longitudinal direction of the object 10. A surface of the first support 30 to become in contact with the object 10 is, preferably, flat.

Item, or method step, 720 refers to moving the first support 30 and the second support 40 relative to each other in a first direction 101, such as in a vertical direction, by the actuating mechanism 28 so that the supports become in contact with the object 10 from opposite sides of the object 10 in the first direction 101 to fix the object 10 between the supports 30, 40, to align the object 10 with the marking head 22, and to arrange the marking head 202 in a suitable distance from the outer surface so that the marking head 22 is capable of producing the markings.

In some embodiments, said providing may be performed by a conveyor device extending between the crimping unit 210 and the marking arrangement 100, or by a robot arm, such as arranged reachable to both the crimping unit 210 and the marking arrangement 100.

In various embodiments, the method may comprise detecting, by a position sensor 50 attached to the first support 30, when the first support 30 is in contact with the object 10 in a marking position in which the marking head 22 is arranged to able to produce the markings.

Item, or method step, 730 refers to producing the markings on the outer surface of the object 10 by the marking head 22 based on marking instructions.

The marking device 20 may be a dot peen marker, wherein the marking head 22 comprises a marking pin. Alternatively, the marking device may 20 be a laser marker, wherein the marking head 22 is a laser marking head.

The method may be stopped at item, method step, 799.

In various embodiments, the object 10 may be a hose crimp 12, and the method thus comprises, before the object 10 is being provided onto the second support 40, crimping the hose crimp 12 onto an end of a hose portion 14 by a crimping unit 210.

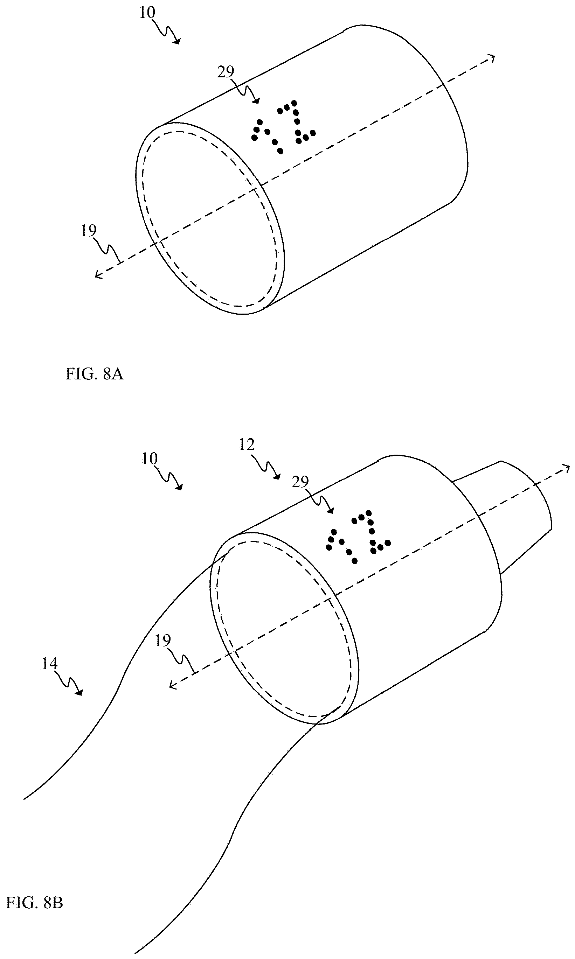

Figures 8A and 8B illustrate an object 10 and a hose assembly, respectively. The object 10 has a cylindrical shape, such as being hollow or solid, and defining a longitudinal direction 19. There are also markings 29 on the outer surface thereof. The hose assembly comprises a hose crimp 12 that has a cylindrical shape and defining a longitudinal direction 19. There are also markings 29 on the outer surface thereof. The hose assembly also comprises a hose portion 14 onto one end of which the hose crimp 12 has been crimped onto.

The scope of the present invention is determined by the appended claims.

A person skilled in the art will appreciate the fact that the disclosed embodiments were constructed for illustrative purposes only, and other arrangements applying many of the above principles could be readily prepared to best suit each potential use scenario.

## Claims

1. A marking arrangement (100) for producing markings (29) on an outer surface of an object (10) having a cylindrical shape, such as being hollow or solid, and defining a longitudinal direction (19), wherein the marking arrangement (100) comprises:
an actuating mechanism (28; 212);
a marking device (20) comprising a marking head (22) configured to produce the markings (29) based on marking instructions;
a first support (30) attached to the marking device (20), wherein a surface of the first support (30) to become in contact with the object (10) is flat;
a second support (40) comprising at least two support surfaces (41, 42) arranged to
- align the object (10) relative to the marking head (20), and
- support the object (10) on opposite sides of the object in a second direction (102), wherein the second direction (102) is perpendicular relative to the longitudinal direction (19) of the object (10);
wherein the marking arrangement (100) is configured so that the first support (30) and the second support (40) are movable relative to each other in a first direction (101), such as in a vertical direction, by the actuating mechanism (28) so that the supports (30, 40) become in contact with the object (10) from opposite sides of the object (10) in the first direction (101) to fix the object (10) between the supports (30, 40), and to align the object (10) with the marking head (22);
**characterized in that**
the marking arrangement (100) further comprises
a position sensor (50) for detecting when the first support (30) is in contact with the object (10) in a marking position in which the marking head (22) is arranged to be able to produce the markings (29), wherein the first support (30) comprises a frame portion (32) and a supporting portion (31) attached movably to each other, and the position sensor (50) is attached to the frame portion (32) or the supporting portion (31) for detecting when the supporting portion (31) is in the marking position.

2. The marking arrangement (100) of claim 1, wherein the at least two support surfaces (41, 42) define at least two slopes on said opposite sides in the second direction (102) so that a distance between them in the second direction (102) becomes smaller when moving away from the first support (30) in the first direction (101), such as at least resembling a V-shape, the second support (40) being arranged to receive the object (10) into an inner space (44) defined by the two slopes for supporting the object (10).

3. The marking arrangement (100) of claim 2, wherein a position of an inner angle defined by the at least two slopes, such as of the V-shape, or their intersecting imaginary extensions is aligned with the marking head (22) with respect to the second direction (102).

4. The marking arrangement (100) of any of claims 1-3, wherein the support surfaces (41, 42) are symmetrically arranged relative to each other, such as defining slopes with the same angle on said opposite sides in the second direction (102).

5. The marking arrangement (100) of any of claims 1-4, wherein the marking device (20) is a dot peen marker, wherein the marking head (22) comprises a marking pin.

6. The marking arrangement (100) of any of claims 1-4, wherein the marking device (20) is a laser marker, wherein the marking head (22) is a laser marking head.

7. A crimping system (200) for providing a crimp assembly including markings on an outer surface of a hose crimp (12) of the crimp assembly, comprising:
a crimping unit (210), such as a hydraulic crimping unit, for crimping a hose crimp (12) onto an end of a hose portion (14);
a marking arrangement (100) according to any of claims 1-6,
a control unit (60) configured to operate the marking head (22) of the arrangement (100) in accordance with marking instructions for producing the markings (29) on an outer surface of the hose crimp (12);
a transfer unit (220) between the crimping unit (210) and the arrangement (100), the transfer unit (220) configured to provide, such as move or transfer, the hose crimp (12) of the crimp assembly from the crimping unit (210) onto the second support (40) of the arrangement (100) to produce the markings (29).

8. The crimping system (200) of claim 7, wherein the marking instructions includes information about the crimp assembly, such as identification number or string, and/or one or several crimping parameter values.

9. The crimping system (200) of claim 7 or 8, wherein the transfer unit (220) comprises:
a conveyor device extending between the crimping unit (210) and the marking arrangement (100), or
a robot arm.

10. A method for producing markings (29) on an outer surface of an object (10) having a cylindrical shape, such as being hollow or solid, and defining a longitudinal direction (19), the method comprising:
- providing (710) the object (10) onto a second support (40) of a marking arrangement (100) comprising an actuating mechanism (28) and a marking device (20) comprising a marking head (22) configured to produce markings (29) on an outer surface of the object (10),
**characterized in that**
the marking arrangement (100) further comprises a first support (30) attached to the marking device (20), wherein a surface of the first support (30) to become in contact with the object (10) is flat, wherein the second support (40) comprises at least two support surfaces (41, 42) arranged to align the object (10) relative to a marking head (22), and to support the object (10) on opposite sides of the object (10) in a second direction (102), wherein the second direction (102) is perpendicular relative to the longitudinal direction (19) of the object (10),
wherein the method further comprises
- moving (720) the first support (30) and the second support (40) relative to each other in a first direction (101), such as in a vertical direction, by the actuating mechanism (28) so that the supports (30, 40) become in contact with the object (10) from opposite sides of the object (10) in the first direction (101) to fix the object (10) between the supports (30, 40), to align the object (10) with the marking head (22), and to arrange the marking head (22) in a suitable distance from the outer surface so that the marking head (22) is capable of producing the markings (29), and
- producing (730) the markings (29) on the outer surface of the object (10) by the marking head (22) based on marking instructions.

11. The method of claim 10, wherein the object is a hose crimp (12), and the method comprises, before the object (10) is being provided onto the second support (40), crimping the hose crimp (12) onto an end of a hose portion (14) by a crimping unit (210).

12. The method of claim 10 or 11, wherein said providing (710) is performed by a conveyor device extending between the crimping unit (210) and the marking arrangement (100), or by a robot arm, such as arranged reachable to both the crimping unit (210) and the marking arrangement (100).

13. The method of any of claims 10-12, comprising detecting, by a position sensor (50) attached to the first support (30), when the first support (30) is in contact with the object (10) in a marking position in which the marking head (22) is arranged to able to produce the markings (29).

## Patentansprüche

1. Markierungsanordnung (100) zum Erzeugen von Markierungen (29) auf einer äußeren Oberfläche eines Objekts (10), das eine zylindrische Form aufweist, wie beispielsweise hohl oder massiv ist, und eine Längsrichtung (19) definiert, wobei die Markierungsanordnung (100) Folgendes aufweist:
einen Betätigungsmechanismus (28; 212);
eine Markierungsvorrichtung (20), die einen Markierungskopf (22) umfasst, der konfiguriert ist, um die Markierungen (29) basierend auf Markierungsanweisungen zu erzeugen;
eine erste Stütze (30), die an der Markierungsvorrichtung (20) befestigt ist, wobei eine Oberfläche der ersten Stütze (30), die in Kontakt mit dem Objekt (10) kommen soll, flach ist;
eine zweite Stütze (40), umfassend mindestens zwei Oberflächen (41, 42), die angeordnet sind zum
- Ausrichten des Objekts (10) in Bezug auf den Markierungskopf (20), und
- Stützen des Objekts (10) auf gegenüberliegenden Seiten des Objekts in einer zweiten Richtung (102), wobei die zweite Richtung (102) senkrecht zur Längsrichtung (19) des Objekts (10) verläuft;
wobei die Markierungsanordnung (100) konfiguriert ist, sodass die erste Stütze (30) und die zweite Stütze (40) durch den Betätigungsmechanismus (28) in einer ersten Richtung (101), beispielsweise in einer vertikalen Richtung, relativ zueinander beweglich sind, sodass die Stützen (30, 40) mit dem Objekt (10) von gegenüberliegenden Seiten des Objekts (10) in der ersten Richtung (101) in Kontakt kommen, um das Objekt (10) zwischen den Stützen (30, 40) zu fixieren und das Objekt (10) mit dem Markierungskopf (22) auszurichten; **dadurch gekennzeichnet, dass**
die Markierungsanordnung (100) ferner Folgendes umfasst
einen Positionssensor (50) zum Erfassen, wenn die erste Stütze (30) in Kontakt mit dem Objekt (10) in einer Markierungsposition ist, in der der Markierungskopf (22) so angeordnet ist, dass er die Markierungen (29) erzeugen kann, wobei die erste Stütze (30) einen Rahmenabschnitt (32) und einen Stützabschnitt (31) umfasst, die beweglich aneinander befestigt sind, und der Positionssensor (50)
an dem Rahmenabschnitt (32) oder dem Stützabschnitt (31) befestigt ist, um zu erfassen, wenn der Stützabschnitt (31) in der Markierungsposition ist.

2. Markierungsanordnung (100) nach Anspruch 1, wobei die mindestens zwei Stützflächen (41, 42) mindestens zwei Schrägen auf den gegenüberliegenden Seiten in der zweiten Richtung (102) definieren, sodass ein Abstand zwischen ihnen in der zweiten Richtung (102) kleiner wird, wenn sie sich von der ersten Stütze (30) in der ersten Richtung (101) wegbewegen, wie zum Beispiel mindestens ähnlich einer V-Form, wobei die zweite Stütze (40) so angeordnet ist, dass sie das Objekt (10) in einem Innenraum (44) empfängt, der durch die beiden Schrägen zum Stützen des Objekts (10) definiert ist.

3. Markierungsanordnung (100) nach Anspruch 2, wobei eine Position eines Innenwinkels, der durch die mindestens zwei Schrägen, wie beispielsweise der V-Form, oder ihre sich schneidenden imaginären Verlängerungen definiert ist, mit dem Markierungskopf (22) in Bezug auf die zweite Richtung (102) ausgerichtet ist.

4. Markierungsanordnung (100) nach einem der Ansprüche 1 bis 3, wobei die Stützflächen (41, 42) relativ zueinander symmetrisch angeordnet sind, beispielsweise indem sie auf den gegenüberliegenden Seiten in der zweiten Richtung (102) Schrägen mit demselben Winkel definieren.

5. Markierungsanordnung (100) nach einem der Ansprüche 1 bis 4, wobei die Markierungsvorrichtung (20) ein Punktmarkierer ist, wobei der Markierungskopf (22) einen Markierungsstift umfasst.

6. Markierungsanordnung (100) nach einem der Ansprüche 1 bis 4, wobei die Markierungsvorrichtung (20) ein Lasermarkierer ist, wobei der Markierungskopf (22) ein Lasermarkierkopf ist.

7. Quetschsystem (200) zum Bereitstellen einer Quetschbaugruppe, das Markierungen auf einer äußeren Oberfläche einer Schlauchquetschung (12) der Quetschbaugruppe einschließt, umfassend:
eine Quetscheinheit (210), wie beispielsweise eine hydraulische Quetscheinheit, zum Quetschen einer Schlauchquetschung (12) auf ein Ende eines Schlauchabschnitts (14);
eine Markierungsanordnung (100) nach einem der Ansprüche 1 bis 6,
eine Steuereinheit (60), die konfiguriert ist, um den Markierungskopf (22) der Anordnung (100) gemäß Markierungsanweisungen zu betreiben, um die Markierungen (29) auf einer äußeren Oberfläche der Schlauchquetschung (12) zu erzeugen;
eine Übertragungseinheit (220) zwischen der Quetscheinheit (210) und der Anordnung (100), wobei die Übertragungseinheit (220) konfiguriert ist, um die Schlauchquetschung (12) der Quetschbaugruppe von der Quetscheinheit (210) auf die zweite Stütze (40) der Anordnung (100) bereitzustellen, wie zum Beispiel zu bewegen oder zu übertragen, um die Markierungen (29) zu erzeugen.

8. Quetschsystem (200) nach Anspruch 7, wobei die Markierungsanweisungen Informationen über die Quetschbaugruppe einschließen, wie beispielsweise eine Identifikationsnummer oder eine Zeichenkette, und/oder einen oder mehrere Quetschparameterwerte.

9. Quetschsystem (200) nach Anspruch 7 oder 8, wobei die Übertragungseinheit (220) Folgendes umfasst:
eine Fördervorrichtung, die sich zwischen der Quetscheinheit (210) und der Markierungsanordnung (100) erstreckt, oder
einen Roboterarm.

10. Verfahren zur Herstellung von Markierungen (29) auf einer äußeren Oberfläche eines Objekts (10), das eine zylindrische Form aufweist, wie beispielsweise hohl oder massiv ist, und eine Längsrichtung (19) definiert, das Verfahren umfassend:
- Bereitstellen (710) des Objekts (10) auf einer zweiten Stütze (40) einer Markierungsanordnung (100), die einen Betätigungsmechanismus (28) und eine Markierungsvorrichtung (20) umfasst, die einen Markierungskopf (22) umfasst, der konfiguriert ist, um Markierungen (29) auf einer äußeren Oberfläche des Objekts (10) zu erzeugen, **dadurch gekennzeichnet, dass** die Markierungsanordnung (100) ferner eine erste Stütze (30) umfasst, die an der Markierungsvorrichtung (20) angebracht ist, wobei eine Oberfläche der ersten Stütze (30), die in Kontakt mit dem Objekt (10) kommen soll, flach ist, wobei die zweite Stütze (40) mindestens zwei Stützoberflächen (41, 42) umfasst, die angeordnet sind, um das Objekt (10) relativ zu einem Markierungskopf (22) auszurichten und das Objekt (10) auf gegenüberliegenden Seiten des Objekts (10) in einer zweiten Richtung (102) zu stützen, wobei die zweite Richtung (102) senkrecht zur Längsrichtung (19) des Objekts (10) ist, wobei das Verfahren ferner Folgendes umfasst
- Bewegen (720) der ersten Stütze (30) und der zweiten Stütze (40) relativ zueinander in einer ersten Richtung (101), wie beispielsweise in einer vertikalen Richtung, durch den Betätigungsmechanismus (28), sodass die Stützen (30, 40) in Kontakt mit dem Objekt (10) von gegenüberliegenden Seiten des Objekts (10) in der ersten Richtung (101) kommen, um das Objekt (10) zwischen den Stützen (30, 40) zu fixieren, das Objekt (10) mit dem Markierungskopf (22) auszurichten und den Markierungskopf (22) in einem geeigneten Abstand von der äußeren Oberfläche anzuordnen, sodass der Markierungskopf (22) in der Lage ist, die Markierungen (29) zu erzeugen, und
- Erzeugen (730) der Markierungen (29) auf der äußeren Oberfläche des Objekts (10) durch den Markierungskopf (22) basierend auf den Markierungsanweisungen.

11. Verfahren nach Anspruch 10, wobei es sich bei dem Objekt um eine Schlauchquetschung (12) handelt und das Verfahren vor dem Bereitstellen des Objekts (10) auf der zweiten Stütze (40) das Quetschen der Schlauchquetschung (12) auf ein Ende eines Schlauchabschnitts (14) durch eine Quetscheinheit (210) umfasst.

12. Verfahren nach Anspruch 10 oder 11, wobei das Bereitstellen (710) durch eine Fördervorrichtung erfolgt, die sich zwischen der Quetscheinheit (210) und der Markierungsanordnung (100) erstreckt, oder durch einen Roboterarm, der so angeordnet ist, dass er sowohl die Quetscheinheit (210) als auch die Markierungsanordnung (100) erreichen kann.

13. Verfahren nach einem der Ansprüche 10 bis 12, umfassend das Erfassen durch einen an der ersten Stütze (30) angebrachten Positionssensor (50), wenn die erste Stütze (30) in Kontakt mit dem Objekt (10) in einer Markierungsposition ist, in der der Markierungskopf (22) so angeordnet ist, dass er die Markierungen (29) erzeugen kann.

## Revendications

1. Dispositif de marquage (100) destiné pour la fabrication de marquages (29) sur une surface extérieure d'un objet (10) ayant une forme cylindrique, par exemple creux ou plein, et la définition d'une direction longitudinale (19), dans lequel le dispositif de marquage (100) comprend :
un mécanisme d'actionnement (28 ; 212) ;
un dispositif de marquage (20) comprenant une tête de marquage (22) configurée pour fabriquer les marquages (29) sur la base d'instructions de marquage ;
un premier support (30) attaché au dispositif de marquage (20), dans lequel une surface du premier support (30) destinée à entrer en contact avec l'objet (10) est plate ;
un second support (40) comprenant au moins deux surfaces de support (41, 42) disposées pour
- aligner l'objet (10) par rapport à la tête de marquage (20), et
- soutenir l'objet (10) sur des côtés opposés de l'objet dans une seconde direction (102), dans lequel la seconde direction (102) est perpendiculaire à la direction longitudinale (19) de l'objet (10) ;
dans lequel le dispositif de marquage (100) est configuré de sorte que le premier support (30) et le second support (40) peuvent se déplacer l'un par rapport à l'autre dans une première direction (101), par exemple verticale, grâce au mécanisme d'actionnement (28) de sorte que les supports (30, 40) entrent en contact avec l'objet (10) à partir de côtés opposés de l'objet (10) dans la première direction (101) pour fixer l'objet (10) entre les supports (30, 40), et pour aligner avec l'objet (10) avec la tête de marquage (22) ; **caractérisé en ce que**
le dispositif de marquage (100) comprend en outre
un capteur de position (50) pour détecter quand le premier support (30) est en contact avec l'objet (10) dans une position de marquage dans laquelle la tête de marquage (22) est disposée pour pouvoir fabriquer les marquages (29), dans lequel le premier support (30) comprend une partie de cadre (32) et une partie de support (31) attachées de manière mobile l'une à l'autre, et le capteur de position (50)
est attaché à la partie de cadre (32) ou à la partie de support (31) pour détecter quand la partie de support (31) est dans la position de marquage.

2. Dispositif de marquage (100) selon la revendication 1, dans lequel les au moins deux surfaces de support (41, 42) définissent au moins deux pentes sur lesdits côtés opposés dans la seconde direction (102) de manière à ce qu'une distance entre elles dans la seconde direction (102) diminue en s'éloignant du premier support (30) dans la première direction (101), de manière à ressembler au moins à une forme en V, le second support (40) étant disposé pour recevoir l'objet (10) dans un espace intérieur (44) défini par les deux pentes pour supporter l'objet (10).

3. Dispositif de marquage (100) selon la revendication 2, dans lequel une position d'un angle intérieur défini par les au moins deux pentes, par exemple celles de la forme en V, ou leurs extensions imaginaires qui se croisent est alignée avec la tête de marquage (22) par rapport à la seconde direction (102).

4. Dispositif de marquage (100) selon l'une quelconque des revendications 1 à 3, dans lequel les surfaces de support (41, 42) sont disposées symétriquement l'une par rapport à l'autre, par exemple en définissant des pentes avec le même angle sur lesdits côtés opposés dans la seconde direction (102).

5. Dispositif de marquage (100) selon l'une quelconque des revendications 1 à 4, dans lequel le dispositif de marquage (20) est un marqueur micro-percussions, dans lequel la tête de marquage (22) comprend une broche de marquage.

6. Dispositif de marquage (100) selon l'une quelconque des revendications 1 à 4, dans lequel le dispositif de marquage (20) est un marqueur laser, dans lequel la tête de marquage (22) est une tête de marquage laser.

7. Système de sertissage (200) pour fournir un ensemble de sertissage comportant des marquages sur une surface extérieure d'un sertissage de tuyau (12) de l'ensemble de sertissage, comprenant :
une unité de sertissage (210), par exemple une unité de sertissage hydraulique, pour le sertissage d'un sertissage de tuyau (12) sur une extrémité d'une portion de tuyau (14) ;
un dispositif de marquage (100) selon l'une quelconque des revendications 1 à 6,
une unité de commande (60) configurée pour faire fonctionner la tête de marquage (22) du dispositif (100) conformément aux instructions de marquage pour la fabrication des marquages (29) sur une surface extérieure du sertissage de tuyau (12) ;
une unité de transfert (220) entre l'unité de sertissage (210) et le dispositif (100), l'unité de transfert (220) étant configurée pour fournir, par exemple déplacer ou transférer, le sertissage de tuyau (12) de l'ensemble de sertissage de l'unité de sertissage (210) sur le second support (40) du dispositif (100) pour fabriquer les marquages (29).

8. Système de sertissage (200) selon la revendication 7, dans lequel les instructions de marquage comportent des informations sur l'ensemble de sertissage, par exemple un numéro ou une chaîne d'identification, et/ou une ou plusieurs valeurs de paramètres de sertissage.

9. Système de sertissage (200) selon la revendication 7 ou 8, dans lequel l'unité de transfert (220) comprend :
un dispositif de convoyage s'étendant entre l'unité de sertissage (210) et le dispositif de marquage (100), ou
un bras robotisé.

10. Procédé de fabrication de marquages (29) sur une surface extérieure d'un objet (10) ayant une forme cylindrique, par exemple creux ou plein, et de définition d'une direction longitudinale (19), le procédé comprenant :
- la fourniture (710) de l'objet (10) sur un second support (40) d'un dispositif de marquage (100) comprenant un mécanisme d'actionnement (28) et un dispositif de marquage (20) comprenant
une tête de marquage (22) configurée pour fabriquer des marquages (29) sur une surface extérieure de l'objet (10),
**caractérisé en ce que**
le dispositif de marquage (100) comprend en outre
un premier support (30) attaché au dispositif de marquage (20), dans lequel une surface du premier support (30) pour entrer en contact avec l'objet (10) est plane, dans lequel le second support (40) comprend au moins deux surfaces de support (41, 42) disposées pour aligner l'objet (10) par rapport à une tête de marquage (22), et pour soutenir l'objet (10) sur des côtés opposés de l'objet (10) dans une seconde direction (102), dans lequel la seconde direction (102) est perpendiculaire à la direction longitudinale (19) de l'objet (10), dans lequel le procédé comprend en outre
- le déplacement (720) du premier support (30) et du second support (40) l'un par rapport à l'autre dans une première direction (101), par exemple dans une direction verticale, grâce au mécanisme d'actionnement (28) de sorte que les supports (30, 40) entrent en contact avec l'objet (10) à partir de côtés opposés de l'objet (10) dans la première direction (101) pour fixer l'objet (10) entre les supports (30, 40), pour aligner l'objet (10) avec la tête de marquage (22), et pour disposer la tête de marquage (22) à une distance appropriée à partir de la surface extérieure de sorte que la tête de marquage (22) peut fabriquer les marquages (29).
- la fabrication (730) des marquages (29) sur la surface extérieure de l'objet (10) par la tête de marquage (22) sur la base des instructions de marquage.

11. Procédé selon la revendication 10, dans lequel l'objet est un sertissage de tuyau (12), et le procédé comprend, avant que l'objet (10) ne soit fourni sur le second support (40), le sertissage du sertissage de tuyau (12) sur une extrémité d'une portion de tuyau (14) par une unité de sertissage (210).

12. Procédé selon la revendication 10 ou 11, dans lequel ladite fourniture (710) est réalisée par un dispositif de convoyage s'étendant entre l'unité de sertissage (210) et le dispositif de marquage (100), ou par un bras robotisé, par exemple disposé de manière à être accessible à la fois par l'unité de sertissage (210) et par le dispositif de marquage (100).

13. Procédé selon l'une quelconque des revendications 10 à 12, comprenant la détection, par un capteur de position (50) attaché au premier support (30), lorsque le premier support (30) est en contact avec l'objet (10) dans une position de marquage dans laquelle la tête de marquage (22) est disposée pour pouvoir fabriquer les marquages (29).
